# EUROPEAN PATENT APPLICATION

(11) **EP 2 693 824 A1**
(43) Date of publication of application: **05.02.2014**
(21) Application number: 12764706.3
(22) Date of filing: 05.01.2012
(51) Int. Cl.: H04W 72/14

(54) **METHOD AND DEVICE FOR TRANSMITTING DOWNLINK DATA**

(30) Priority: 31.03.2011 CN 201110080296
(71) Applicant: China Academy of Telecommunications Technology, Hai Dian District Beijing 100191 (CN)
(72) Inventor: CHEN, Li, Beijing 100191 (CN); XU, Fangli, Beijing 100191 (CN); DING, Yu, Beijing 100191 (CN)
(74) Representative: Gunzelmann, Rainer
(86) International application number: PCT/CN2012/070075
(87) International publication number: WO 2012/129970

(57) **Abstract**

The present invention provides a method and an apparatus for transmitting downlink data, where unused MBSFN subframes are used for scheduling and transmitting downlink unicast data to specified terminal devices adopting a pre-defined transmission mode. Therefore, PDSCH transmission is implemented in MBSFN while the power consumption of terminal devices is kept at the same level as in the conventional art because there is no addition and modification to the higher layer signaling procedures.

## Description

The present invention claims priority of Chinese patent application No. 201110080296.9 titled "method and apparatus for transmitting downlink data" and filed on 31.03.2011 with the Patent Office of the People's Republic of China, the disclosure of which is incorporated by reference in its entirety for all purposes.

### Field of the Invention

The present invention relates to communications, and particularly to a method and an apparatus for transmitting downlink data.

### Background of the Invention

Multimedia Broadcast Multicast Service (MBMS) is for providing multimedia broadcasting services and multicast services for users in a wireless cell. In Long Term Evolution (LTE) systems, MBMS is provided at both frequency layers shared by non-MBMS services and MBMS-dedicated frequency layers. An MBMS-enabled LTE cell may be an MBMS-dedicated cell or an MBMS/unicast-mixed cell. MBMS traffic may be transmitted by a single cell or by multiple cells collectively. Multi-cell transmission of MBMS traffic requires MBSFN (Multimedia Broadcast multicast service Single Frequency Network) transmission to be enabled.

MBSFN refers to synchronized transmission by multiple cells at the same time and at the same frequency. The MBSFN transmission mode may save frequency resources and increase frequency utility ratio. It requires the same information be transmitted at the same time by multiple cells. Thus the multiple MBSFN cells may be regarded as a large cell by the receiver of a User Equipment (UE). Therefore, the UE will not be influenced by inter-cell interferences generated by transmission in adjacent cells; instead, the UE will be benefitted from the superposition of signals from the multiple MBSFN cells. The MBSFN transmission mode may be adopted by both MBMS-dedicated cells and MBMS/unicast hybrid cells. In addition, intra-cell interferences may be eliminated by adopting advanced techniques at UE receivers to solve the multi-path propagation problem. Furthermore, diversity generated by the multi-cell co-frequency transmission may solve the problem of blind-area coverage, and thereby increase reception reliability and coverage rate.

Technical characteristics of MBMS multi-cell transmission include:
(1) synchronous transmission of MBMS within an MBSFN domain;
(2) support for combination of MBMS transmission from multiple cells;
(3) mapping of logic channels including Multicast Traffic Channel (MTCH) and Multicast Control Channel (MCCH) onto transport channels for Point to Multipoint (PTM) transmission, i.e., Multicast Channels, and then onto physical channels, i.e., Physical Multicast Channels (PMCH);
(4) that MBSFN synchronous areas may be configured in a semi-static manner, e.g., through operation and maintenance (O&M); and
(5) in an MBSFN subframe, the first 1∼2 symbols are control symbols, for bearing Physical Downlink Control Channel (PDCCH) that is for scheduling unicast transmission, and the remaining part is a data field for bearing PMCH when there are MBMS traffic transmitted.

Logic channels related with MBMS transmission mainly include: Broadcast Control Channel (BCCH), MCCH and MTCH.

Functions of the channels are as follows.
(1) BCCH:
   Broadcast Control Channel, is for broadcasting system information to UEs by the network. For MBMS, there are two types of broadcast information that may be transmitted, i.e., SIB2 for specifying all MBSFN subframes; SIB13 for scheduling notification subframes (the notification scheme is for notification of MCCH modifications) and MCCHs. The schedule command may include an indication of the MBSFN subframe which bears the notification and the MCCH.
(2) MCCH:
   Multicast Control Channel, being a point-to-multi-point downlink channel, is for transmitting control information related with MBMS in the MBSFN domain to UEs by the network. One MCCH may be corresponding to one or multiple MTCHs (i.e., may include control information of multiple MTCHs). MCCH may transmit information including: information on subframe allocation in the MBSFN domain, configuration information of a PMCH (or MCH) (e.g., MBMS session information, data MCS format configuration, a PMCH subframe position and a scheduling period, etc.), and so on.
(3) MTCH:
   Multicast Traffic Channel, being a point-to-multi-point downlink channel, is for transmitting MBMS traffic data to UEs by the network.

The network may use a BCCH (SIB2, SIB13) to inform a UE of configuration information of an MCCH, then use the MCCH to provide (P) MCH information for the UEs. A UE may obtain MCH Scheduling Information (MSI) from the (P) MCH so as to receive MBMS traffic from the MTCH. It is the MSI MAC Control Element that indicates the MBSFN subframe used for transmitting MBMS traffic.

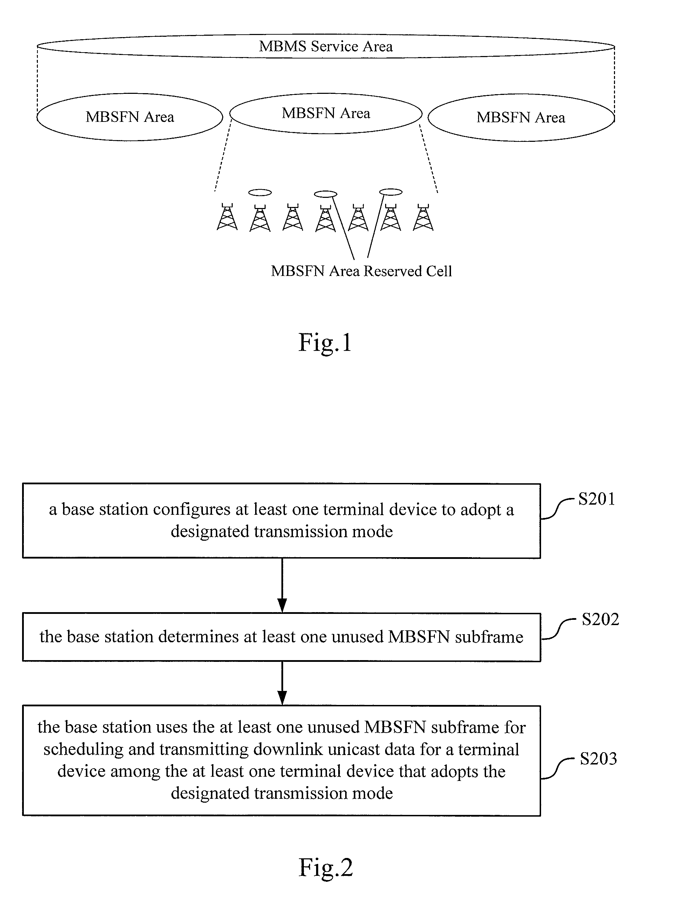

Fig.1 is a schematic diagram illustrating a relation between an MBMS service area and MBSFN synchronized areas according to the prior art.

Physical layer protocols have specified that terminals of LTE R10 may use an MBSFN subframe which is not used for MBMS transmission (also called an unused MBSFN subframe) for receiving a Downlink Shared Channel (DL-SCH) transmitted in a Physical Downlink Shared Channel (PDSCH). Specifically, only the terminals whose base stations are configured to work under the Transmission Mode 8 (TM8) or Transmission Mode 9 (TM9) may receive from an MBSFN subframe the DL-SCH transmitted in a PDSCH.

In R10 specifications, the physical layer is configured with antenna ports and MIMO transmission mode adopted by the terminals according to the needs of users. The above TM8 and TM9 are two transmission modes proposed by R10. More details can be found in 3GPP 36.213.8.1, and will not be described further herein.

During the process of conceiving the present invention, the inventor found the conventional art has at least the following defects.

According to conventional upper layer protocols, terminals are not allowed to receive from an MBSFN subframe indicated by SIB2 a DL-SCH transmitted in a PDSCH, i.e., cannot receive unicast downlink transmission from an MBSFN subframe. Correspondingly, the terminals are also not allowed to receive a PDCCH for scheduling PDSCH from control symbols in an MBSFN subframe.

In other words, conventional upper layer protocols cannot satisfy terminals' needs of receiving from an unused MBSFN subframe a DL-SCH transmitted in a PDSCH as proposed by the physical layer.

If it is simply provisioned that terminals are allowed to receive from an MBSFN subframe indicated by SIB2 a DL-SCH transmitted in a PDSCH, terminals will have to receive all MBSFN subframes, parse the PDCCH and make judgements on whether there is downlink transmission scheduled. In normal conditions, only those terminals that receive MBMS traffic have to receive corresponding MBSFN subframes, while other terminals do not receive the MBSFN subframes and thus save energy. Generally, there are only a small amount of unused MBSFN subframes. Making all terminals receive all MBSFN subframes will result in too much power consumption by terminals, which is not worthwhile regarding the resource consumption.

### Summary of the Invention

Embodiments of the present invention provide a method and an apparatus for transmitting downlink data so as to implement PDSCH scheduling and transmission by using MBSFN subframes.

Therefore, embodiments of the present invention provide a method for transmitting downlink data which may include:
configuring, by a base station, at least one terminal device to adopt a designated transmission mode;
determining, by the base station, at least one unused Multimedia Broadcast multicast service Single Frequency Network (MBSFN) subframe;
scheduling and transmitting in the at least one unused MBSFN subframe, by the base station, downlink unicast data to a terminal device among the at least one terminal device that adopts the designated transmission mode.

Embodiments of the present invention also provide a base station which may include:
a configuring module, to configure at least one terminal device to adopt a designated transmission mode;
a determining module, to determine at least one unused MBSFN subframe; and
a processing module, to schedule and transmit downlink unicast data to a terminal device among the at least one terminal device configured by the configured module that adopts the designated transmission mode in the at least one unused MBSFN subframe determined by the determining module.

Embodiments of the present invention also provide a method for transmitting downlink data which may include:
receiving, by a terminal device, an indication message for configuring a transmission mode for the terminal device sent by a base station;
receiving from an MBSFN subframe, by the terminal device, a PDCCH transmitted by the base station in response to a determination that the indication message configures the terminal device to adopt a designated transmission mode, and detecting whether downlink transmission to the terminal device is scheduled; and
receiving from a data field in the MBSFN subframe, by the terminal device, a DL-SCH transmitted in a PDSCH in response to a determination that the downlink transmission to the terminal device is scheduled.

Embodiments of the present invention also provide a terminal device which may include:
a receiving module, to receive an indication message for configuring a transmission mode for the terminal device sent by a base station;
a detecting module, to receive from an MBSFN subframe a PDCCH transmitted by the base station in response to a determination that the indication message received by the receiving module configures the terminal device to adopt a designated transmission mode, and detect whether downlink transmission to the terminal device is scheduled; and
a processing module, to receive from a data field in the MBSFN subframe a DL-SCH transmitted in PDSCH in response to a determination that the downlink transmission to the terminal device is scheduled.

Compared with the prior art, the present invention has merits as follows.

Through the technical schemes provided by embodiments of the present invention, unused MBSFN subframes are used for scheduling and transmitting downlink unicast data to specified terminal devices adopting a pre-defined transmission mode. Therefore, PDSCH transmission is implemented in MBSFN while the power consumption of terminal devices is kept at the same level as in the conventional art because there is no addition and modification to the upper layer signaling procedures.

### Brief Description of Drawings

Fig.1 is a schematic diagram illustrating a relation between an MBMS service area and MBSFN synchronized areas according to the prior art.
Fig.2 is a flowchart illustrating a method performed by a base station for transmitting downlink data in accordance with an embodiment of the present invention.
Fig.3 is a flowchart illustrating a method performed by a terminal device for transmitting downlink data in accordance with an embodiment of the present invention.
Figs.4a and 4b are flowcharts illustrating a method for transmitting downlink data applied to an application scenario in accordance with an embodiment of the present invention.
Figs.5a and 5b are flowcharts illustrating a method for transmitting downlink data applied to an application scenario in accordance with an embodiment of the present invention.
Fig. 6 is a schematic diagram illustrating a structure of a base station in accordance with an embodiment of the present invention.
Fig. 7 is a schematic diagram illustrating a structure of a terminal device in accordance with an embodiment of the present invention.

### Detailed Description of the Invention

As analyzed in the background part, conventional upper layer protocols cannot satisfy terminals' needs of receiving from an unused MBSFN subframe a DL-SCH transmitted in a PDSCH as proposed by a physical layer.

If it is provisioned that terminal devices are allowed to receive from an MBSFN subframe indicated by SIB2 a DL-SCH transmitted in a PDSCH, all terminal devices will have to receive MBSFN subframes, which results in too much power consumption. But in fact, there are few available MBSFN subframes that are not occupied by MBMS transmission.

In order to solve the above problem, embodiments of the present invention propose to use a unused MBSFN subframe in scheduling and transmitting downlink unicast data for terminal devices working under a designated transmission mode.

The main idea of the present invention includes: using an unused MBSFN subframe for transmitting a PDSCH for a terminal device with a designated transmission mode.

An unused MBSFN subframe refers to an MBSFN subframe which is not used for MBMS transmission, and may further eliminate other MBSFN subframes that cannot be used for unicast transmission, e.g., a backhaul subframe used for a DeNB and a relay, a subframe which bears a Positioning Reference Signal (PRS) and is used for positioning.

Fig.2 is a flowchart illustrating a method for transmitting downlink data in accordance with an embodiment of the present invention. The method may include the following procedures.

In block 201, a base station configures at least one terminal device to adopt a designated transmission mode.

In block 202, the base station determines at least one unused MBSFN subframe. This procedure may include:
the base station determines subframes other than those for MBMS transmission in an MBSFN subframe set indicated by SIB2 to be the at least one unused MBSFN subframe; or
the base station determines subframes other than those for MBMS transmission or other purposes in an MBSFN subframe set indicated by SIB2 to be the at least one unused MBSFN subframe.

The subframes for other purposes may include:
a backhaul subframe used in transmission between a DeNB and a relay; and/or
a subframe bearing a PRS and used for positioning.

In block S203, the base station uses the at least one unused MBSFN subframe for scheduling and transmitting downlink unicast data for a terminal device among the at least one terminal device that adopts the designated transmission mode.

With respect to differences in terminal devices for which scheduling and transmission of downlink unicast data are performed in this procedure, the technical scheme provided by an embodiment of the present invention may include the following two methods.

Method one may include: scheduling and transmitting downlink unicast data for all the terminal devices that are configured to adopt the designated transmission mode.

According to method one, the base station may perform operations directly based on information of the designated transmission mode configured in block S201.

Method two may include: selecting some of the terminal devices that adopt the designated transmission mode, only scheduling and transmitting the downlink unicast data for terminal devices that have uplink data to be scheduled.

The method two requires first determining the terminal devices that have uplink data to be scheduled. Specifically, the method of determining the terminal devices that have uplink data to be scheduled may include the following manners.
1. When the base station receives an uplink scheduling request sent by a terminal device adopting the designated transmission mode, the base station determines the terminal device has uplink data to be scheduled.
2. When the base station receives a buffer state report sent by a terminal device adopting the designated transmission mode and scheduling of data amount of the terminal device that in buffer of the terminal device is reported has not been completed, the base station determines the terminal device has uplink data to be scheduled.
3. When the base station determines arrival of periodic data at the current time spot and there are no other pre-determined resources that can bear the periodic data, the base station determines the terminal device has uplink data to be scheduled.

The above manners may be adopted individually or collectively. As for specific determining criteria, variations to the determining methods do not affect the protection scope of the present invention.

The above method two differs from the method one in that the method two introduces a judgment on whether a terminal device has uplink data to be scheduled and the unused MBSFN subframes can only be used in downlink transmission for terminal devices that have uplink data to be scheduled.

The method two has the merits of: when a terminal device does not have uplink data to be scheduled, the terminal device does not have to receive the MBSFN subframe and analyze a PDCCH; when a terminal device is to perform uplink transmission, the terminal device was supposed to receive the MBSFN subframe and analyze the PDCCH, and doing so does not add to overhead of the terminal device because the Downlink Control Information (DCI) for scheduling downlink transmission by using an unused MBSFN subframe according to the designated transmission mode has the same length with the DCI for scheduling uplink transmission. Thus, the performance regarding power consumption of terminal devices according to method two is the same with that according to conventional protocols. Terminal devices configured to adopt the designated transmission mode according to method one have to receive all MBSFN subframes and analyze PDCCH in all the MBSFN subframes, thus may consume more power.

After the above determining process, the base station schedules and transmits downlink unicast data on the unused MBSFN subframe for terminal devices that adopt the designated transmission mode and have uplink data to be scheduled.

In practical application scenarios, the specific transmission mode may be transmission mode 9.

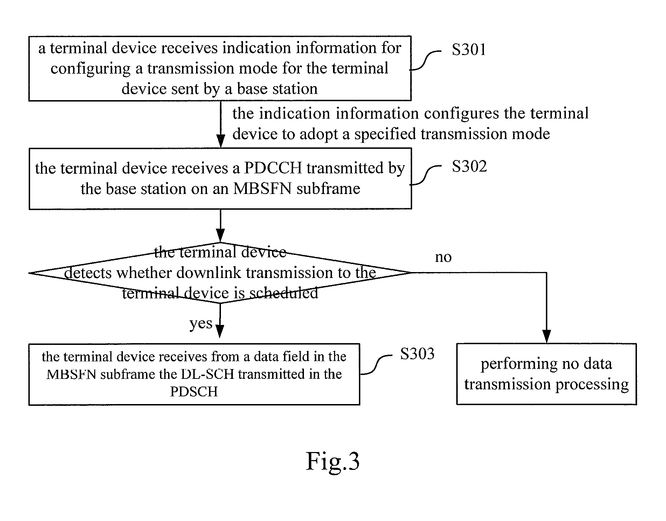

Corresponding to the above technical scheme, an embodiment of the present invention also provides a processing procedure performed by a terminal device. The process is as shown in Fig.3, and may include the following procedures.

In block S301, a terminal device receives an indication message for configuring a transmission mode for the terminal device sent by a base station.

In block S302, the terminal device receives a PDCCH transmitted by the base station on an MBSFN subframe in response to a determination that the indication message configures the terminal device to adopt a designated transmission mode, and detects whether downlink transmission to the terminal device is scheduled.

Corresponding to the two methods described in block S103, there are two situations when the terminal device determines to perform the procedure in block S302.

Corresponding to the method one in block 103, the terminal device may receive the PDCCH and detect scheduling information of downlink transmission as long as the indication message configures the terminal device to adopt the designated transmission mode.

Corresponding to the method two in block S103, the terminal device may receive the PDCCH and detect scheduling information of downlink transmission in response to a determination that the indication message configures the terminal device to adopt the specified transmission mode and the terminal device has uplink data to be scheduled currently.

It may be decided which of the two technical schemes is to be adopted based on practical needs and configuration of the base station, and variations also belong to the protection scope of the present invention.

After the detection is completed, the procedure in block S303 may be performed in response to a determination that there is uplink data to be scheduled for the terminal device, or no data transmission processing is performed in response to a determination that there is no uplink data to be scheduled for the terminal device.

In block S303, the terminal device receives from a data field in the MBSFN subframe the DL-SCH transmitted in the PDSCH.

No matter which technical scheme is adopted as the criteria for determining whether to perform the detection in the above block S302, the following schemes may be adopted for subsequent PDCCH reception and corresponding detection.

Scheme one is based on SIB2 configuration.

The terminal device receives the PDCCH transmitted by the base station from an MBSFN subframe in an MBSFN subframe set configured by SIB2, and detects whether downlink transmission to the terminal device is scheduled.

Scheme two is based on the unused MBSFN subframe.

When the terminal device has received MBMS configuration information, and/or, configuration information of an MBSFN subframe used for other purposes, the terminal device acknowledges a subframe for MBMS transmission and/or an MBSFN subframe for other purposes.

When the terminal device has received a PDCCH transmitted by the base station from an unused MBSFN subframe, the terminal device detects whether downlink transmission to the terminal device is scheduled, wherein the unused MBSFN subframe is among an MBSFN subframe set configured by SIB2 and is other than an MBMS transmission subframe and/or an MBSFN subframe for other purposes as follows:
a backhaul subframe used in transmission between a DeNB and a relay; and/or
a subframe bearing PRS and used for positioning.

Any one of the above two schemes may be adopted for reception processing according to the needs, and this will not affect the protection scope of the present invention.

In practical application scenarios, the specific transmission mode may be transmission mode 9.

Compared with the prior art, the present invention has merits as follows.

Through the technical schemes provided by embodiments of the present invention, unused MBSFN subframes are used for scheduling and transmitting downlink unicast data to specified terminal devices adopting a pre-defined transmission mode. Therefore, PDSCH transmission is implemented in MBSFN while the power consumption of terminal devices is kept at the same level as in the conventional art because there is no addition and modification to the higher layer signaling procedures.

The technical scheme provided by embodiments of the present invention is illustrated as follows by referring to several application scenarios.

In a specific application scenario, the technical scheme of an embodiment may restrict the terminal devices that are allowed to use the unused MBSFN subframes for transmitting PDSCH to be:
(1) terminal devices that are configured by the base station to work under transmission mode 9 (tm9), and/or
(2) terminal devices that have uplink data to be scheduled.

In an embodiment, it is determined a terminal device has uplink data to be scheduled when:
an uplink data buffer is not empty; or
an uplink data buffer is not empty and the base station has started scheduling uplink transmission for the terminal device; or
an uplink data buffer is not empty, the base station has not started scheduling uplink transmission for the terminal device, and an uplink scheduling request has been transmitted by the terminal device.

According to the above methods, the processing procedures are described with reference to the following scenarios.

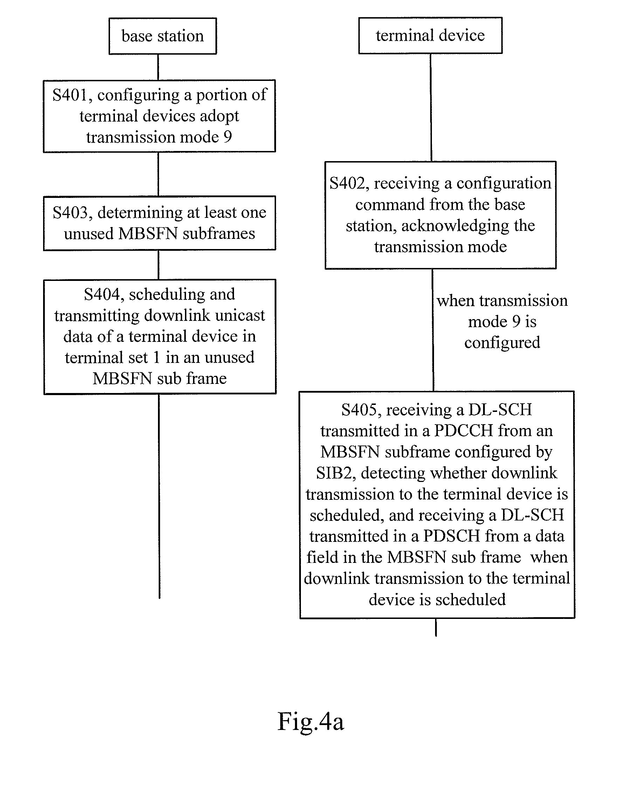

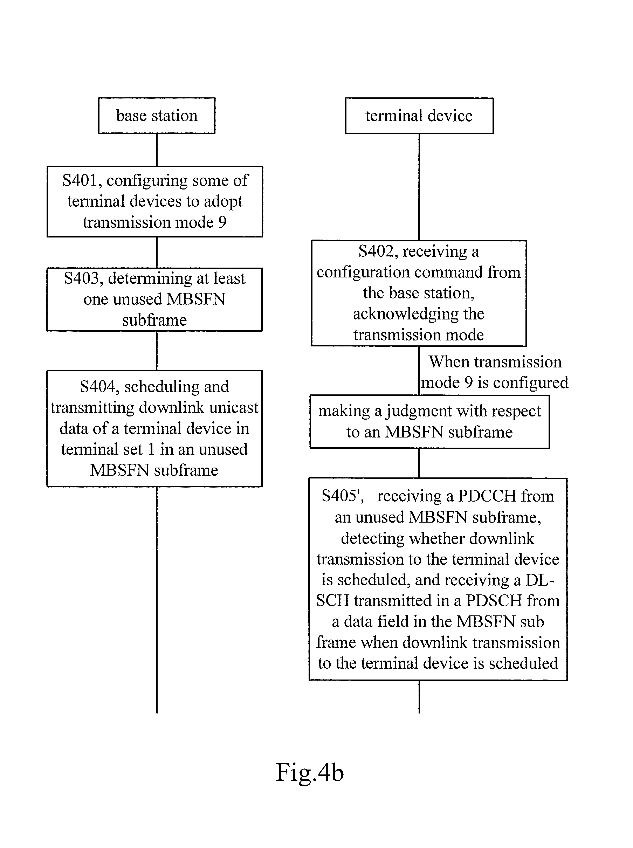

In embodiment one, a base station schedules downlink transmission by using unused MBSFN subframes to all of terminal devices that are configured to work under transmission mode 9. The processing flow may be as shown in Fig.4a and Fig.4b.

In block S401, the base station configures some of terminal devices to adopt transmission mode 9.

A set composed of the terminal devices is referred to as terminal set 1.

In block S402, a terminal device receives a configuration command from the base station, and acknowledges the transmission mode.

In block S403, the base station determines at least one unused MBSFN subframe.

The procedure in block S403 may be performed immediately after the procedure in block S401 is completed, and is not necessarily performed after the procedure in block S402. The above index numbers are adopted merely to facilitate description, and is not for limiting the protection scope of the present invention.

In block S404, the base station performs scheduling and transmission of downlink unicast data for terminal devices in the terminal set 1 by using the at least one unused MBSFN subframe.

In block S405, a terminal device receives a PDCCH from an MBSFN subframe configured by SIB2 in response to a determination that the terminal device is configured to adopt transmission mode 9, detects whether there is downlink (DL) assignment for the terminal device, and receives from a data field of the MBSFN subframe a DL-SCH in a PDSCH in response to a determination that there is DL assignment for the terminal device.

In block S405', the terminal device may make a basic judgment of the unused MBSFN subframe in response to a determination that the terminal device is configured with transmission mode 9, receives a PDCCH from the MBSFN subframe, detects whether there is DL assignment for the terminal device, and receives from a data field of the MBSFN subframe a DL-SCH in the PDSCH in response to a determination that there is DL assignment for the terminal device.

The judging procedure for an unused MBSFN subframe has been described in block S302, thus will not be described further herein.

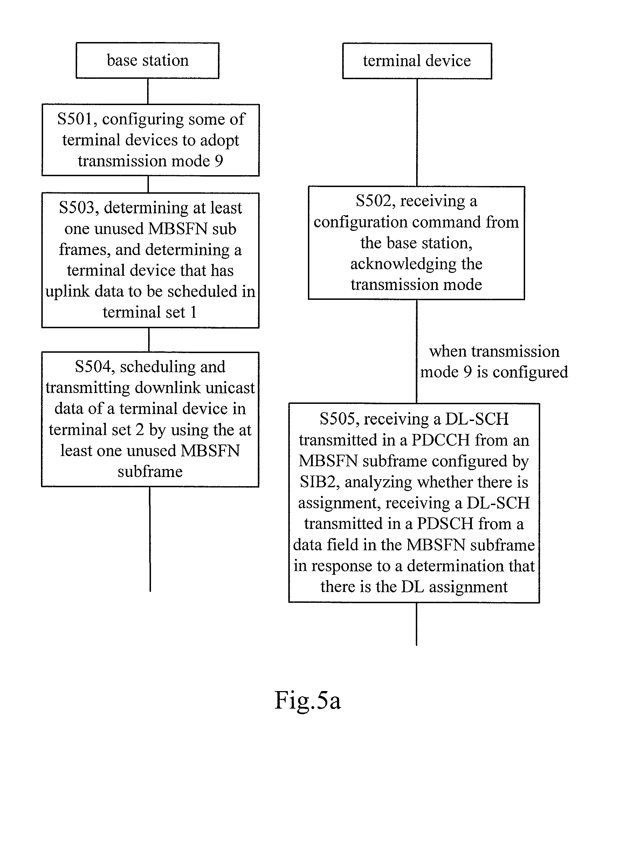

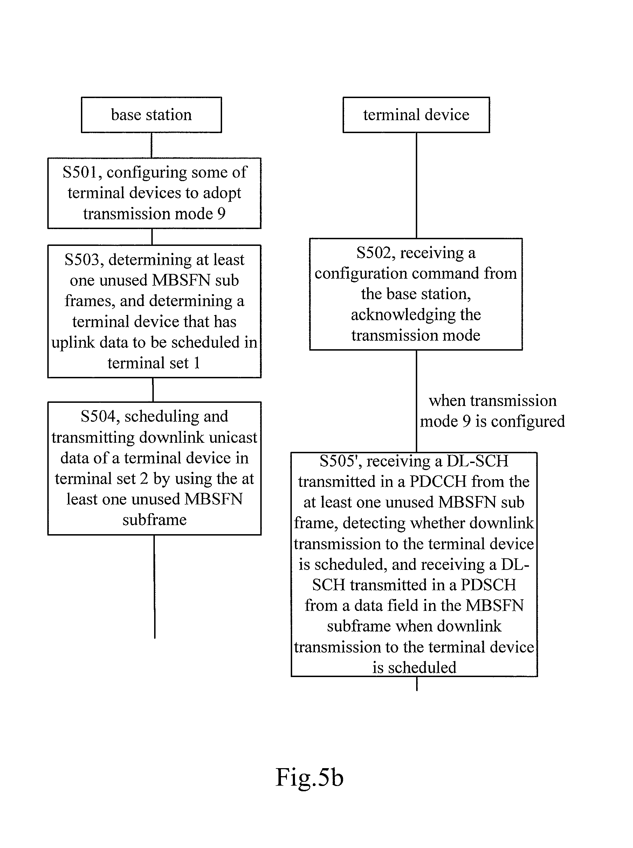

In embodiment two, a base station schedules downlink transmission by using unused MBSFN subframes to terminal devices that are configured to work under transmission mode 9 and have uplink transmission. The processing flow may be as shown in Fig.5a and Fig.5b.

In block S501, the base station configures some of terminal devices with transmission mode 9.

The terminal devices form a set called terminal set 1.

In block S502, a terminal device receives a configuration command from the base station, and acknowledges the transmission mode.

In block S503, the base station determines at least one unused MBSFN subframe, and determines terminal devices in terminal set 1 that have uplink data to be scheduled.

A set composes of the terminal devices determined is referred to as terminal set 2.

The procedure in block S503 may be performed immediately after the procedure in block S501 is completed, and is not necessarily performed after the procedure in S502. The above index numbers are adopted merely to facilitate description, and is not for limiting the protection scope of the present invention.

In block S504, the base station performs scheduling and transmission of downlink unicast data for terminal devices in the terminal set 2 in the at least one unused MBSFN subframe.

In block S505, the terminal device receives a PDCCH from an MBSFN subframe configured by SIB2 in response to a determination that the terminal device is configured to adopt transmission mode 9 (tm9) and has uplink data to be transmitted, analyzes whether there is DL assignment, and receives from a data field of the MBSFN subframe a DL-SCH transmitted in the PDSCH in response to a determination that there is the DL assignment.

In block 505', the terminal device may make a judgement with respect to an unused MBSFN subframe in response to a determination that the terminal device is configured to adopt tm9 and has uplink data to be transmitted, receives a PDCCH from an unused MBSFN subframe set determined, analyzes whether there is DL assignment, and receives from a data field of the MBSFN subframe a DL-SCH transmitted in the PDSCH in response to a determination that there is the DL assignment.

Compared with the prior art, the present invention has merits as follows.

Through the technical schemes provided by embodiments of the present invention, unused MBSFN subframes are used for scheduling and transmitting downlink unicast data to specified terminal devices adopting a pre-defined transmission mode. Therefore, PDSCH transmission is implemented in MBSFN while the power consumption of terminal devices is kept at the same level as in the conventional art because there is no addition and modification to the higher layer signaling.

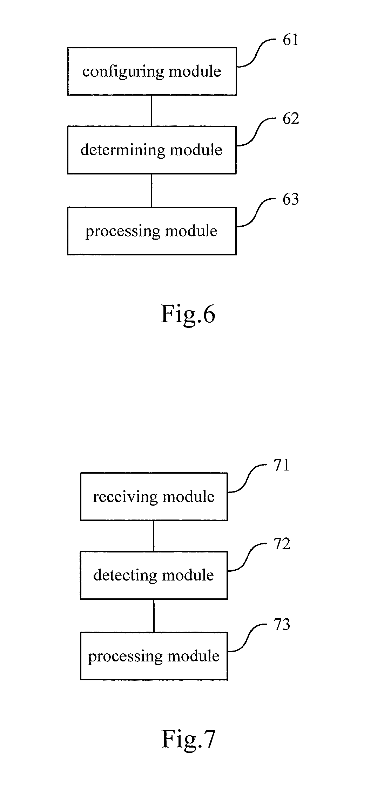

An embodiment of the present invention also provides a base station. A structure of the base station is as shown in Fig.6, and may include the following components:
a configuring module 61, to configure at least one terminal device to adopt a designated transmission mode.
a determining module 62, to determine at least one unused MBSFN subframe.
a processing module 63, to schedule and transmit downlink unicast data to a terminal device among the at least one terminal device configured by the configured module 61 that adopts the designated transmission mode in the at least one unused MBSFN subframe determined by the determining module 62.

The determining module 62 may be to:
determine at least one subframe in an MBSFN subframe set indicated by SIB2 that is other than a subframe for MBMS transmission to be the at least one unused MBSFN subframe; or
determine at least one subframe in an MBSFN subframe set indicated by SIB2 that is other than a subframe for MBMS transmission or other purposes to be the at least one unused MBSFN subframe.

In an application scenario, the processing module 63 may be to:
schedule and transmit the downlink unicast data to all of the at least one terminal device configured by the configuring module 61 that adopts the designated transmission mode in the at least one unused MBSFN subframe.

In another application scenario, the determining module 62 may be to determine the terminal device that has uplink data to be scheduled among the at least one terminal device that adopts the designated transmission mode.

Correspondingly, the processing module 63 may be to:
schedule and transmit the downlink unicast data to the terminal device that has the uplink data to be scheduled among the at least one terminal device that adopts the specified transmission mode in the at least one unused MBSFN subframe determined by the determining module 62.

Embodiments of the present invention also provide a terminal device. A structure of the terminal device may be as shown in Fig.7 which may include the following components:
a receiving module 71, to receive an indication message for configuring a transmission mode for the terminal device sent by a base station.
a detecting module 72, to receive from an MBSFN subframe a PDCCH transmitted by the base station in response to a determination that the indication message received by the receiving module 71 configures the terminal device to adopt a designated transmission mode, and detect whether downlink transmission to the terminal device is scheduled.
a processing module 73, to receive from a data field in the MBSFN subframe a DL-SCH transmitted in PDSCH in response to a determination that the downlink transmission to the terminal device is scheduled.

The detecting module 72 may be to:
receive from an MBSFN subframe the PDCCH transmitted by the base station in response to the determination that the indication message received by the receiving module 71 configures the terminal device to adopt the designated transmission mode and that the terminal device has uplink data to be transmitted, and detect whether the downlink transmission to the terminal device is scheduled.

Correspondingly, the detecting module 72 may be to:
receive the PDCCH transmitted by the base station from an MBSFN subframe in an MBSFN subframe set configured by SIB2, and detect whether the downlink transmission to the terminal device is scheduled.

In another embodiment, the detecting module 72 may be to:
acknowledge a subframe for MBMS transmission and/or the MBSFN subframe for other purposes when the receiving module receives MBMS configuration information and/or configuration information of the MBSFN subframe used for other purposes; and
receive the PDCCH transmitted by the base station from an unused MBSFN subframe that is in an MBSFN subframe set configured by SIB2 and is other than the subframe for the MBMS transmission and/or the MBSFN subframe for other purposes, detect whether the downlink transmission to the terminal device is scheduled.

Compared with the prior art, the present invention has merits as follows.

Through the technical schemes provided by embodiments of the present invention, unused MBSFN subframes are used for scheduling and transmitting downlink unicast data to specified terminal devices adopting a pre-defined transmission mode. Therefore, PDSCH transmission is implemented in MBSFN while the power consumption of terminal devices is kept at the same level as in the conventional art because there is no addition and modification to the higher layer signaling procedures.

Through the above description, those skilled in the art may understand that the embodiments of the present invention may be implemented by hardware or by a general-purpose hardware platform together with software. Therefore, the technical scheme provided by the embodiments may be in the form of a software product which may be stored in a non-transient storage medium (e.g., a CD-ROM, a flash disk, a mobile hard disk, etc.) and includes several instructions to cause a computer (e.g., a PC, a server, a network device, etc.) to execute the methods provided by embodiments of the present invention for various application scenarios.

Those skilled in the art should understand each of the drawings are merely a schematic diagrams of an embodiment, and not all the modules and the procedures in the drawings are necessary for implementing the present invention.

Those skilled in the art can understand the modules in the apparatus of embodiments of the present invention may be located in the apparatus as described in the embodiments, or may be located in one or more apparatuses of the embodiments of the present invention when modified accordingly. The modules in embodiments of the present invention may be combined into one module, or may be further divided into multiple sub modules.

The index numbers of the embodiments are merely for facilitating description, and should not be interpreted to be representative for the preference order of the embodiments.

The foregoing is only some embodiments of the present invention. The protection scope of the present invention, however, is not limited to the above description. Any change or substitution that is within the scope disclosed by the present invention and can easily occur to those skilled in the art should be covered by the protection scope of the present invention.

## Claims

1. A method for transmitting downlink data, comprising:
configuring, by a base station, at least one terminal device to adopt a designated transmission mode;
determining, by the base station, at least one unused Multimedia Broadcast multicast service Single Frequency Network (MBSFN) subframe; and
scheduling and transmitting in the at least one unused MBSFN subframe, by the base station, downlink unicast data to a terminal device among the at least one terminal device that adopts the designated transmission mode.

2. The method of claim 1, wherein the determining by the base station at least one unused MBSFN subframe comprises:
determining, by the base station, at least one subframe in an MBSFN subframe set indicated by SIB2 that is other than a subframe for MBMS transmission to be the at least one unused MBSFN subframe; or
determining, by the base station, at least one subframe in an MBSFN subframe set indicated by SIB2 that is other than a subframe for MBMS transmission or other purposes to be the at least one unused MBSFN subframe,
wherein the subframe for other purposes comprises:
a backhaul subframe used in transmission between a DeNB and a relay, and/or
a subframe bearing PRS and used for positioning.

3. The method of claim 1, wherein the scheduling and transmitting in the at least one unused MBSFN subframe by the base station downlink unicast data to a terminal device among the at least one terminal device that adopts the designated transmission mode comprises:
scheduling and transmitting in the at least one unused MBSFN subframe, by the base station, the downlink unicast data to all of the at least one terminal device that adopts the designated transmission mode.

4. The method of claim 1, further comprising:
before scheduling and transmitting in the at least one unused MBSFN subframe by the base station downlink unicast data to a terminal device among the at least one terminal device that adopts the specified transmission mode; and
determining, by the base station, the terminal device that has uplink data to be scheduled among the at least one terminal device that adopts the designated transmission mode.

5. The method of claim 4, wherein the determining the terminal device that has uplink data to be scheduled among the at least one terminal device that adopts the designated transmission mode comprises:
determining, by the base station, that the terminal device adopting the designated transmission mode has the uplink data to be scheduled when the base station receives an uplink scheduling request sent from the terminal device, and/or
determining, by the base station, that the terminal device adopting the specified transmission mode has the uplink data to be scheduled when the base station receives a buffer state report sent by the terminal device and the base station has not completed scheduling of data amount of the terminal device that in buffer of the terminal device is reported; and/or
determining, by the base station, that the terminal device has the uplink data to be scheduled when the base station detects arrival of periodic data at a current time spot and there is no other pre-determined resources that can bear the periodic data.

6. The method of claim 4, wherein the scheduling and transmitting in the at least one unused MBSFN subframe by the base station downlink unicast data to a terminal device among the at least one terminal device that adopts the specified transmission mode comprises:
scheduling and transmitting in the at least one unused MBSFN subframe, by the base station, the downlink unicast data to the terminal device that has uplink data to be scheduled among the at least one terminal device that adopts the specified transmission mode.

7. The method of any of claims 1 to 6, wherein the designated transmission mode is transmission mode 9.

8. A base station, comprising,
a configuring module, to configure at least one terminal device to adopt a designated transmission mode;
a determining module, to determine at least one unused MBSFN subframe; and
a processing module, to schedule and transmit downlink unicast data to a terminal device among the at least one terminal device configured by the configured module that adopts the designated transmission mode in the at least one unused MBSFN subframe determined by the determining module.

9. The base station of claim 8, wherein the determining module is to
determine at least one subframe in an MBSFN subframe set indicated by SIB2 that is other than a subframe for MBMS transmission to be the at least one unused MBSFN subframe; or
determine at least one subframe in an MBSFN subframe set indicated by SIB2 that is other than a subframe for MBMS transmission or other purposes to be the at least one unused MBSFN subframe.

10. The base station of claim 8, wherein the processing module is to
schedule and transmit the downlink unicast data to all of the at least one terminal device configured by the configuring module that adopts the designated transmission mode in the at least one unused MBSFN subframe.

11. The base station of claim 8, wherein the determining module is further to
determine the terminal device that has uplink data to be scheduled among the at least one terminal device that adopts the designated transmission mode.

12. The base station of claim 11, wherein the processing module is to
schedule and transmit the downlink unicast data to the terminal device that has the uplink data to be scheduled among the at least one terminal device that adopts the specified transmission mode in the at least one unused MBSFN subframe determined by the determining module.

13. A method for transmitting downlink data, comprising,
receiving, by a terminal device, an indication message for configuring a transmission mode for the terminal device sent by a base station;
receiving from an MBSFN subframe, by the terminal device, a PDCCH transmitted by the base station in response to a determination that the indication message configures the terminal device to adopt a designated transmission mode, and detecting whether downlink transmission to the terminal device is scheduled; and
receiving from a data field in the MBSFN subframe, by the terminal device, a DL-SCH transmitted in a PDSCH in response to a determination that the downlink transmission to the terminal device is scheduled.

14. The method of claim 13, wherein the receiving from an MBSFN subframe by the terminal device a PDCCH transmitted by the base station in response to a determination that the indication message configures the terminal device to adopt a designated transmission mode and detecting whether downlink transmission to the terminal device is scheduled comprises:
receiving, by the terminal device, the PDCCH transmitted by the base station from the MBSFN subframe in response to a determination that the indication message configures the terminal device to adopt the designated transmission mode and that the terminal device has uplink data to be transmitted, and detecting whether the downlink transmission to the terminal device is scheduled.

15. The method of claim 13 or 14, wherein the receiving by the terminal device the PDCCH transmitted by the base station from the MBSFN subframe and detecting whether downlink transmission to the terminal device is scheduled comprise:
receiving from the MBSFN subframe in an MBSFN subframe set configured by SIB2, by the terminal device, the PDCCH transmitted by the base station, and detecting whether the downlink transmission to the terminal device is scheduled.

16. The method of claim 13 or 14, wherein the receiving by the terminal device the PDCCH transmitted by the base station from the MBSFN subframe and detecting whether downlink transmission to the terminal device is scheduled comprise:
acknowledging, by the terminal device, a subframe for MBMS transmission and/or the MBSFN subframe for other purposes when the terminal device receives MBMS configuration information and/or configuration information of the MBSFN subframe used for other purposes;
receiving, by the terminal device, the PDCCH transmitted by the base station from an unused MBSFN subframe that is in an MBSFN subframe set configured by SIB2 and is other than an subframe for MBMS transmission and/or an MBSFN subframe for other purposes, detecting, by the terminal device, whether the downlink transmission to the terminal device is scheduled;
wherein the MBSFN subframe for other purposes comprises:
a backhaul subframe used in transmission between a DeNB and a relay; and/or
a subframe bearing PRS and used for positioning.

17. The method of claims 13, wherein the designated transmission mode is transmission mode 9.

18. A terminal device, comprising:
a receiving module, to receive an indication message for configuring a transmission mode for the terminal device sent by a base station;
a detecting module, to receive from an MBSFN subframe a PDCCH transmitted by the base station in response to a determination that the indication message received by the receiving module configures the terminal device to adopt a designated transmission mode, and detect whether downlink transmission to the terminal device is scheduled; and
a processing module, to receive from a data field in the MBSFN subframe a DL-SCH transmitted in PDSCH in response to a determination that the downlink transmission to the terminal device is scheduled.

19. The base station of claim 18, wherein the detecting module is further to:
receive from an MBSFN subframe the PDCCH transmitted by the base station in response to the determination that the indication message received by the receiving module configures the terminal device to adopt the designated transmission mode and that the terminal device has uplink data to be transmitted, and detect whether the downlink transmission to the terminal device is scheduled.

20. The base station of claim 18 or 19, wherein the detecting module is to:
receive the PDCCH transmitted by the base station from an MBSFN subframe in an MBSFN subframe set configured by SIB2, and detect whether the downlink transmission to the terminal device is scheduled.

21. The base station of claim 18 or 19, wherein the detecting module is to:
acknowledge a subframe for MBMS transmission and/or the MBSFN subframe for other purposes when the receiving module receives MBMS configuration information and/or configuration information of the MBSFN subframe used for other purposes; and
receive the PDCCH transmitted by the base station from an unused MBSFN subframe that is in an MBSFN subframe set configured by SIB2 and is other than the subframe for the MBMS transmission and/or the MBSFN subframe for other purposes, detect whether the downlink transmission to the terminal device is scheduled.
